# EUROPEAN PATENT SPECIFICATION

(11) **EP 2 343 753 B1**
(45) Date of publication and mention of the grant of the patent: **31.07.2013**
(21) Application number: 10195819.7
(22) Date of filing: 17.12.2010
(51) Int. Cl.: H01M 2/10

(54) **Battery pack**
Batteriepack
Bloc-batteries

(30) Priority: 18.12.2009 KR 20090127270
(43) Date of publication of application: 13.07.2011
(73) Proprietor: Samsung SDI Co., Ltd, Gyeonggi-do (KR)
(72) Inventor: Baek, Woon-Seong, Chungcheongnam-do (KR)
(74) Representative: Walaski, Jan Filip

(56) References cited:
- EP-A1- 1 717 882
- EP-A2- 2 136 451
- WO-A1-2006/078103

## Description

The present invention relates to a secondary battery, and more particularly, to a battery pack that does not need an insulating tape in the manufacturing process, thereby simplifying the manufacturing of the external case. Furthermore, the battery pack has improved structural integrity thereby not being easily bent.

In general, a battery pack includes a chargeable and dischargeable secondary battery. The secondary battery includes a Ni-Cd battery, Ni-MH battery, a Li battery, a Liion battery, and a Li polymer battery.

The battery pack is divided into two types in accordance with an external shape. That is, the battery pack is divided into a hard pack battery in which the housing of plastic resin is integrally molded on the external surface of the battery where an external terminal electrically coupled to an external apparatus is exposed and an inner pack battery in which the housing of plastic resin is not molded on the external surface of the battery where an external terminal is exposed.

Since a part of the external surface of the hard pack battery is exposed where the hard pack battery is mounted in the external apparatus, at least, a part of the housing of the exposed external surface is made of the same material as the housing of the external apparatus. Therefore, the battery may be easily mounted in the external apparatus. However, the housing of the battery must be manufactured in accordance with the shape and structure of the external apparatus.

On the other hand, since an additional external case is attached when the inner pack battery is mounted in the external apparatus, it is difficult to mount the inner pack battery in comparison with the hard pack battery. However, the inner pack battery may be used regardless of the shape and structure of the external apparatus. Therefore, the inner pack battery that may be used regardless of the shape and structure of the external apparatus is continuously developed.

Accordingly, an aspect of the present invention has been made to provide a battery pack that does not need an insulating tape so that processes of manufacturing an external case may be simplified.

According to another aspect of the present invention there is provided a battery pack having improved structural integrity and thereby not being easily bent.

EP 1 717 882 discloses a polymer battery pack that includes a resin sheath enclosing a core pack.

According to the invention, there is provided a battery pack as defined in claim 1.

The frame case may include a pair of ribs extended toward the pair of long sides of the bare cell on at least one side.

According to another aspect of the present invention, there is provided a battery pack, including bare cells, a circuit member electrically coupled to the bare cell, a battery accommodating frame to cover the entire outside of the bare cell excluding the pair of long sides of the bare cell, and a frame case to cover the outer circumference of the battery accommodating frame. The battery accommodating frame includes a pair of ribs extended toward the pair of long sides of the bare cell on at least one side.

According to still another aspect of the present invention, there is provided a battery pack, including bare cells, a protection circuit module electrically coupled to the bare cell, and a frame case to cover the entire outside of the bare cell excluding the pair of long sides of the bare cell. An undercut is formed on one internal side of the frame case in which the bare cell is settled. accommodating frame includes an undercut on the internal side in which the bare cell is settled.

The frame case is square or rectangular shaped and is integrally formed. However, it is understood that the frame case can have any other shape or form in which the battery is accommodated. The battery accommodating frame may wrap only a part of the bare cell or may not be included in the battery pack.

One of the pair of ribs of the frame case or the battery accommodating frame is longer than the other so that the battery pack is easily accommodated and is firmly settled.

The outline frame further includes at least one opening formed in a region corresponding to the external terminal in a plane of the outline frame so that the external terminal including the circuit member is exposed. The battery pack further includes a label for wrapping the outside of the battery pack.

When one side of the frame case or the battery accommodating frame is the undercut, one side of the bare cell is forcedly settled in the undercut. One side of the undercut is formed to be longer than the other side toward the long sides of the bare cell.

The battery pack according to an aspect of the present invention does not need an insulating tape, simplifying the processes of manufacturing an external case and further reducing the number of parts.

In addition, since the battery pack according to an aspect of the present invention is formed by coupling the frame case including the undercut or the battery accommodating frame to the bare cell, the battery pack is not easily bent and is firmly fixed.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a perspective view illustrating a battery pack according to an embodiment of the present invention;
FIG. 2 is an exploded perspective view illustrating the battery pack according to an embodiment of the present invention;
FIG. 3 is a vertical sectional view illustrating a bare cell in the battery pack according to an embodiment of the present invention; and
FIG. 4A is a sectional view illustrating a frame case and a bare cell in the battery pack according to an embodiment of the present invention before the frame case and the bare cell are coupled to each other;
FIG. 4B is a sectional view illustrating the frame case and the bare cell in the battery pack according to an embodiment of the present invention after the frame case and the bare cell are coupled to each other;
FIG. 5 is an enlarged perspective view illustrating the part A illustrated in FIG. 4B;
FIG. 6 is an exploded perspective view illustrating the battery pack according to an embodiment of the present invention;
FIG. 7 is an exploded perspective view illustrating the battery pack according to an embodiment of the present invention; and
FIG. 8 is an exploded perspective view illustrating a battery pack.

Reference will now be made in detail to the present embodiments of the present invention, examples of which are illustrated in the accompanying drawings, wherein like reference numerals refer to the like elements throughout. The embodiments are described below in order to explain the present invention by referring to the figures. Here, when a first element is described as being coupled to a second element, the first element may be not be only directly coupled to the second element but may also be indirectly coupled to the second element via a third element.

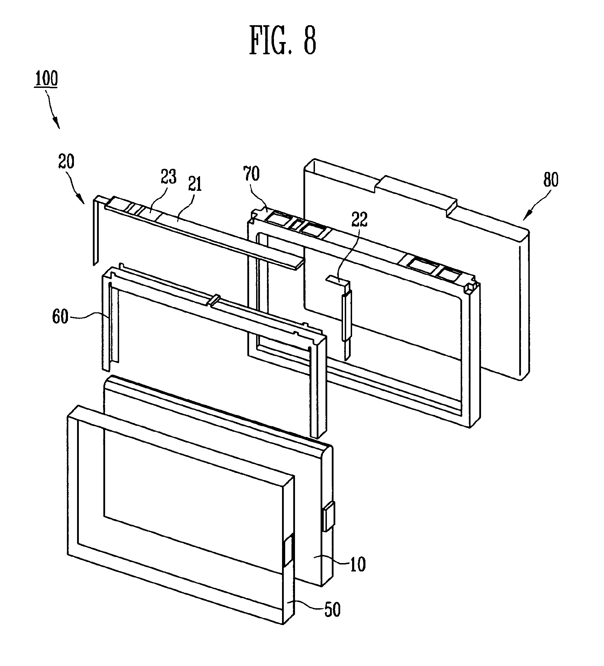

FIG. 8 is an exploded perspective view illustrating a battery pack. As illustrated in FIG. 8, the battery pack 100 includes a bare cell 10, which may be rechargeable, a protection circuit module 20 which may include a circuit member electrically coupled to the bare cell to control charge and discharge of the bare cell 10 and to block a circuit during overcharge and discharge, an auxiliary case 60 coupled between the bare cell 10 and the circuit member 20 so that the circuit member 20 is not separated from the bare cell 10, an insulating tape 50 to couple the auxiliary case 60 and the bare cell 10 to each other, and an external case 70 to pack the bare cell, the circuit member, and resin to be molded in a shape that may be mounted in an external set.

In order to manufacture the battery pack 100, so that a lead (not shown) is coupled to the positive electrode of the bare cell 10 and a PTC 22 is coupled to the negative electrode, the circuit member 20 is electrically coupled to the lead and the PTC 22. Then, the auxiliary case 60 is coupled between the circuit member 20 and the bare cell 10 to be mechanically fixed so that the circuit member 20 is not separated from the bare cell 10 and packs the bare cell 10 and the circuit member 20 that are integrated with each other using the external case 70 having a shape that may be mounted in an external apparatus. Here, the external case 70 may include various cases such as a case for wrapping the circuit member 20 to prevent a short and for protecting the circuit member 20 from external shock and a case for wrapping the bare cell 10 to protect edges of the bare cell 10 from external shock. In this configuration, the external case 70 is hook coupled to the circuit member 20 and is coupled to the circuit member 20 by bonding, adhesion, and taping to form a cover case shaped battery pack. In addition, the external case 70 is coupled to the circuit member 20 and may be wrapped by a label 80 together with the bare cell 10.

In addition, an insulating tape 50 is formed between the above shaped auxiliary case 60 and the bare cell 10 so that the auxiliary case 60 may be coupled to the bare cell 10. The tape used to manufacture an inner pack battery is coupled to the bare cell 10 in order to fix and insulate the case 60. In a common taping work, in the instance of a double-sided tape, two operations are added to the processes of manufacturing the inner pack battery and, in the case of a single-sided tape, one operation is added to the process of manufacturing the inner pack. These additional processes however complicate the manufacturing process of the battery pack.

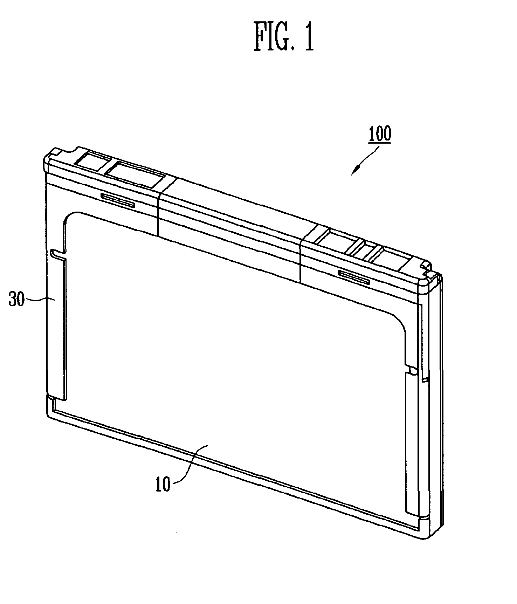

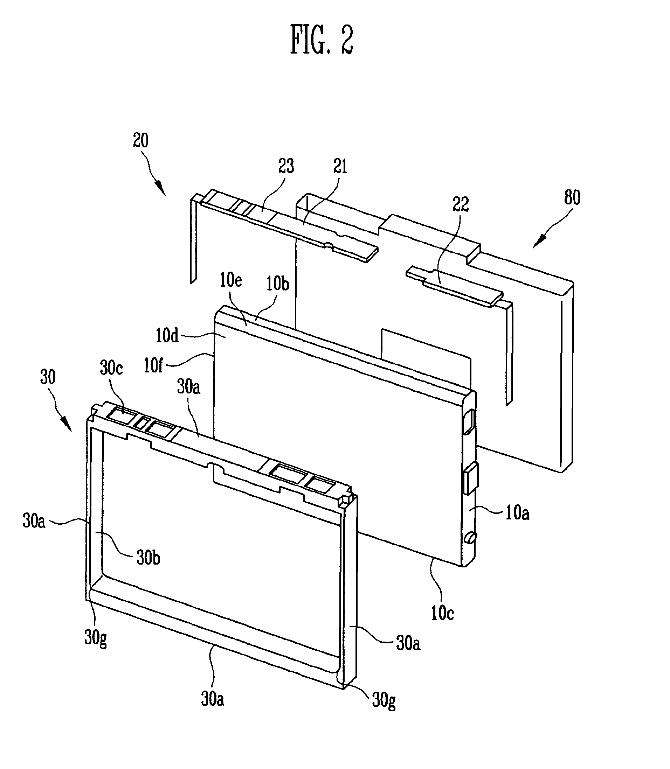

FIG. 1 is a perspective view illustrating a battery pack according to an embodiment of the present invention. FIG. 2 is an exploded perspective view illustrating the battery pack according to the embodiment of the present invention shown in FIG. 1.

As illustrated in FIGs. 1 and 2, the battery pack 100 according to an embodiment of the present invention includes the chargeable and dischargeable bare cell 10, the circuit member 20 electrically coupled to the bare cell 10, and a frame case 30 to wrap the outer circumference of the bare cell 10 including the circuit member 20. The frame case 30 has an undercut 30g formed in a part where one side of the bare cell is disposed. In one embodiment, the undercut 30g may have a round shape, but it will be appreciated that the undercut is not restricted to a particular shape, but rather may be any suitable shape. The undercut may alternatively be referred to as a curved recess.

As illustrated in FIG. 2, the frame case 30 has the round shaped undercut 30g, in which one side of the bare cell 10 is disposed and to which one side of the bare cell 10 may be firmly fixed, formed on one side so that the bare cell 10 is forcedly inserted into the round shaped undercut 30g. When the undercut 30g is formed, both sides of the undercut 30g naturally wrap the bare cell 10. First, the placing of the bare cell 10 in the frame case 30 may be difficult due to the raised sides of the undercut. However, once the bare cell 10 is positioned in, the bare cell 10 may be firmly coupled to the undercut 30g without using an additional tape.

According to an aspect of the present invention, the frame case 30 may include a pair of ribs extended toward the pair of long sides of the bare cell 10 on at least one side. When the pair of ribs may be formed to be long to wrap a predetermined part of the long sides of the bare cell 10, it is possible to obtain a similar effect of forming the undercut 30g.

According to an embodiment of the present invention, the bare cell 10 may be pouch shaped or can shaped. However, as illustrated in the figures, the bare cell 10 is can shaped.

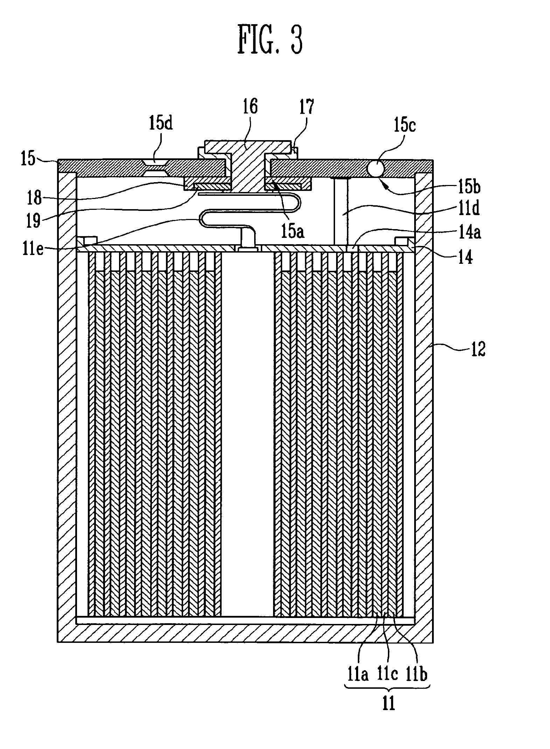

FIG. 3 is a vertical sectional view illustrating a bare cell 10 in the battery pack 100 according to an embodiment of the present invention.

As illustrated in FIG. 3, the bare cell 10 includes an electrode assembly 11, a can 12 in which the electrode assembly 11 is accommodated, and a can assembly 13 for sealing the upper end opening of the can 12.

The electrode assembly 11 is formed by laminating and winding a positive electrode plate 11 a coated with a positive electrode active material, a negative electrode plate 11b coated with a negative electrode active material, and a separator 11c interposed between the positive electrode plate 11a and the negative electrode plate 11b.

A positive electrode tab 11d is electrically coupled to the positive electrode plate 11a in the region of a positive electrode collector where a positive electrode active material layer is not formed. A negative electrode tab 11e is electrically coupled to the negative electrode plate 11b in the region of a negative electrode collector where a negative electrode active material layer is not formed. Insulating tapes to prevent a short between an electrode tab and two electrode plates may be wound around boundaries on which the positive electrode tab 11d and the negative electrode tab 11e are withdrawn from the electrode assembly 11. In addition, the width of the separator 11c is formed to be larger than the widths of the positive electrode plate 11a and the negative electrode plate 11b to prevent a short between the electrode plates.

On the other hand, an insulating case 14 to electrically insulate the electrode assembly 11 and the can assembly 13 from each other and to cover the upper end of the electrode assembly 11 may be provided on the top of the electrode assembly 11. The insulating case 14 having an insulation property is made of polymer resin. In addition, a through hole is formed in the center of the insulating case 14 so that the negative electrode tab passes through, and an electrolyte passing hole 14a is formed on the side of the insulating case 14.

The can 12 is made of aluminum or an aluminum alloy and has a roughly cuboid shape to accommodate the electrode assembly 11 through the opened upper end and to function as the container of the electrode assembly 11 and an electrolyte. In addition, the can 12 may function as a terminal.

The can assembly 13 includes a flat plate shaped cap plate 15 having the size and shape corresponding to the opened top of the can 12. At this time, a terminal through hole 15a is formed in the center of the cap plate 15 and a tube shaped gasket 17 is provided between an electrode terminal 16 that passes through the terminal through hole 15a and the cap plate 15. In addition, an insulating plate 18 is provided on the bottom of the cap plate 15 and a terminal plate 19 is provided on the bottom of the insulating plate 18. In addition, the bottom of the electrode terminal 16 is electrically coupled to the terminal plate 19. The positive electrode tab 11d extending from the positive electrode plate 11a a is welded to the bottom of the cap plate 15 and the negative electrode tab lie extending from the negative electrode plate 11b is welded to the bottom of the electrode terminal 16 while having a zigzag shaped curved part.

An electrolyte injecting hole 15b is formed on one side of the cap plate 15. After an electrolyte is injected, in order to seal the injecting hole 15b, a stopper 15c is provided. The stopper 15c that is a ball shaped material is made of aluminum or an aluminum containing metal and is put on the electrolyte injecting hole 15b and is mechanically pressed inserted into the electrolyte injecting hole 15b. In addition, for sealing, the stopper 15c is welded to the cap plate 15 around the electrolyte injecting hole 15b. On the other hand, a safety vent 15d is formed on the other side of the cap plate 15. The safety vent 15d is broken when the pressure in the battery rises to be no less than a predetermined pressure to prevent the battery from being ignited and exploding.

On the other hand, according to an aspect of the present invention, the bare cell 10 may be rectangular and the direction in which the positive electrode tab 11d and the negative electrode tab 11e of the bare cell 10 are formed is referred to as an "upper" direction.

As illustrated in FIG. 2, the circuit member 20 is electrically coupled to the bare cell 10. The circuit member 20 includes a protective circuit module (PCM) 21 and the positive temperature coefficient (PTC) 22. The PTC 22 is electrically coupled between the negative electrode of the circuit member 20 and the electrode terminal 16 so that electrical coupling between the negative electrode of the circuit member 20 and the electrode terminal 16 may be blocked when temperature excessively rises or an excessive amount of current flows.

The frame case 30 is coupled to the bare cell 10 which is electrically coupled to the circuit member 20 to form a part of the external appearance of the battery pack 100 as illustrated in FIGS. 1 and 2.

Referring to FIG. 2, the frame case 30 has a rectangular or square shaped to cover the top 10a of the bare cell 10, the bottom 10f of the bare cell 10, and a pair of short sides 10b and 10c coupled to the top 10a of the bare cell 10. The frame case 30 may be integrally formed.

In addition, the frame case 30 includes the round shaped undercut 30g on one side. In addition, the frame case 30 may further include an opening 30c.

The plane 30a of the frame case 30 is formed to cover the top 10a, the pair of short sides 10b and 10c, and the bottom 10f of the bare cell 10. Here, in order to cover the top 10a, the pair of short sides 10b and 10c, and the bottom 10f of the bare cell 10, the plane 30a may have the same width.

FIG. 2 illustrates the step difference 30b of the frame case 30. The step difference 30b is the part extending from the end of the plane 30a to the inside of the frame case 30 to cover the edges of the pair of long sides 10d and 10e of the bare cell 10.

The at least one opening 30c of the frame case 30 is formed in the region corresponding to an external terminal 23 provided in the circuit unit 20 provided on the top 10a of the bare cell 10 in the plane 30a in order to expose the external terminal 23.

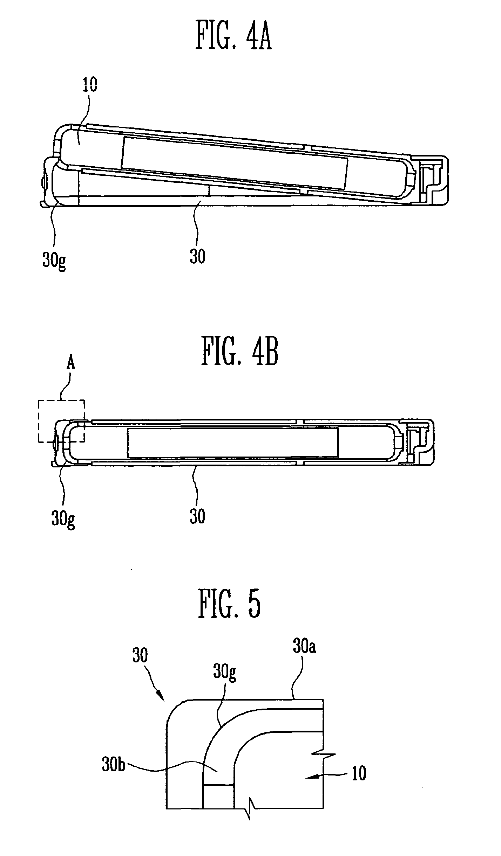

The battery pack 100 is not easily bent when the bare cell 10 is mounted in the frame case 30. As illustrated in FIG. 5, the frame case 30 has the round shaped undercut 30g formed on one side thereof. The undercut 30g of the frame case 30 starts from the part where the plane 30a of the frame case 30 contacts the step difference 30b and is formed with a predetermined radius so that the bare cell 10 is naturally mounted in the frame case 30. As illustrated in FIGS. 4A and 4B, when the round shaped undercut 30g is formed from the region in which the plane 30a and the step difference 30b of the frame case 30 contact each other, interference may occur when the bare cell 10 is first coupled as compared to the frame case 30 having the structure in which the above undercut 30g is not formed However, when the bare cell 10 is placed in the round shape undercut 30g, the bare cell 10 is more firmly coupled to the frame case 30 and the battery pack 100 is not easily bent. Accordingly, the insulating tape is not necessary, thereby simplifying the manufacturing process of the external case and furthermore reducing the number of parts of the battery pack 100.

In addition, the frame case 30 may be wrapped by the label 80 together with the bare cell 10.

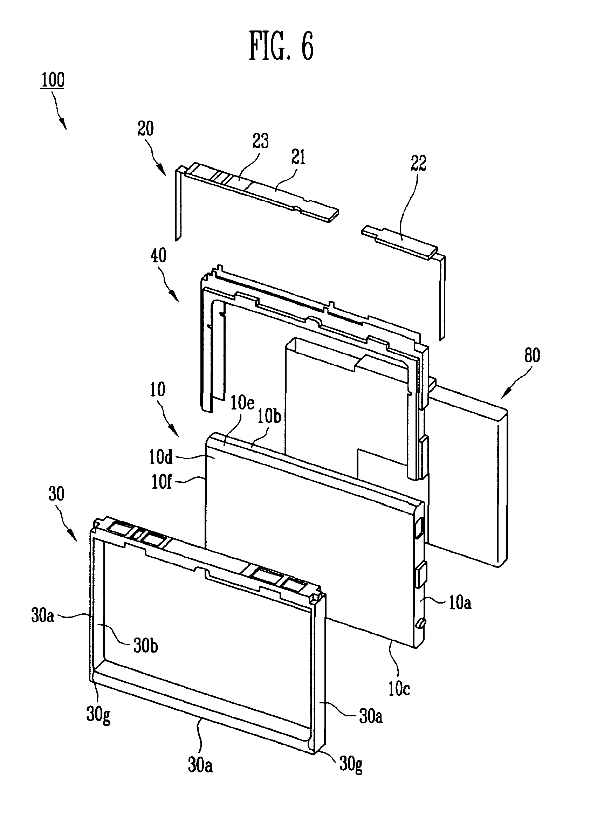

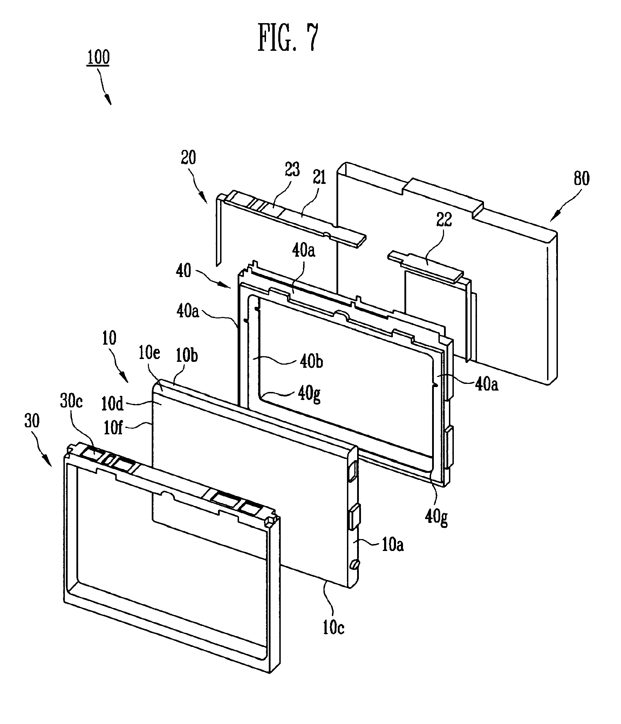

FIGS. 6 and 7 are exploded perspective views illustrating the battery pack according to another embodiment of the present invention.

As illustrated in FIGS. 6 and 7, the battery pack 100 according to another embodiment of the present invention includes the bare cell 10, the circuit member 20, and the frame case 30. According to the present embodiment, since the bare cell 10, the circuit member 20, and the frame case 30 were described above, a description thereof will be omitted. Therefore, according to the present embodiment, a battery accommodating frame 40 that wraps a part or the entire outer circumference of the bare cell 10 will be described in detail.

As illustrated in FIG. 6, the battery pack 100 according to another embodiment of the present invention includes the battery accommodating frame 40 that partially wraps the external circumference of the bare cell 10. The battery accommodating frame 40 is coupled between the bare cell 10 and the circuit member 20 to prevent the circuit member 20 from being separated from the bare cell 10. The battery accommodating frame 40 has a rectangular or square shaped with a missing side to cover the top 10a, one short side 10b, and the bottom 10f of the bare cell 10.

As illustrated in FIG. 7, the battery pack 100 according to still another embodiment of the present invention includes the battery accommodating frame 40 that wraps the outer circumference of the bare cell 10. The battery accommodating frame 40 is rectangular or square shaped so as to cover the top 10a, the pair of short sides 10b and 10c, and the bottom 10f of the bare cell 10.

The battery accommodating frame 40 includes a round shaped undercut 40g on the internal side of where the bare cell is settled. In addition, the battery accommodating frame 40 further includes a pair of ribs extended from a plane 40a to the long sides of the bare cell.

The plane 40a of the battery accommodating frame 40 covers the top 10a, the pair of short sides 10b and 10c, and the bottom 10f of the bare cell 10. The plane 40a for covering the top 10a, the pair of short sides 10b and 10c, and the bottom 10f of the bare cell 10 may have the same width.

The step difference 40b of the battery accommodating frame 40 is illustrated in FIG. 7. The step difference 40b is a portion of the body accommodating frame 40 which extends in a direction from the end of the plane 30a to the inside of the battery accommodating frame 40 to cover the edges of the pair of long sides 10d and 10e of the bare cell 10. According to an aspect of the present invention, the internal side of the one side of the battery accommodating frame 40 wraps predetermined parts of the long sides 10d and 10e of the bare cell 10 by forming the round shape undercut 30g or the pair of ribs. The bare cell 10 is firmly coupled to the battery accommodating frame 40 without using an additional insulating tape. The battery pack is not easily bent.

Although a few embodiments of the present invention have been shown and described, it would be appreciated by those skilled in the art that changes may be made in this embodiment without departing from the principles of the invention, the scope of which is defined in the claims.

## Claims

1. A battery pack comprising:
a bare cell;
a protection circuit module electrically coupled to the bare cell; and
a frame case to cover an entire outside surface of the bare cell excluding a pair of long sides of the bare cell,
wherein an undercut is formed on one internal side of the frame case in which the bare cell is accommodated, **characterised in that**
the frame case is shaped to receive the bare cell through forcible insertion of the bare cell into the undercut.

2. The battery pack as claimed in claim 1, wherein the frame case is square or rectangular.

3. The battery pack as claimed in claim 1 or 2, wherein one side of the undercut of the frame case is longer than the other side which extends towards the long sides of the bare cell.

4. The battery pack as claimed in any one of the preceding claims, wherein the frame case further comprises at least one opening on one side of the frame case so that an external terminal included in the protection circuit module is exposed.

5. The battery pack as claimed in any one of the preceding claims, wherein the battery pack further comprises a battery accommodating frame to cover a part of an external side of the bare cell between the bare cell and the frame case.

6. The battery pack as claimed in any one of the preceding claims, wherein the frame case comprises a pair of ribs extended toward the pair of long sides of the bare cell on at least one side of the frame case.

7. The battery pack as claimed in claim 6, wherein one of the pair of ribs of the frame case is longer than the other.

8. The battery pack as claimed in claim 1, further comprising an outline frame to cover the outer circumference of the frame case.

9. The battery pack as claimed in claim 8, wherein the outline frame further comprises at least one opening formed in a region corresponding to the external terminal in a plane of the outline frame so that the external terminal including the protection circuit module is exposed.

10. The battery pack as claimed in many one of the preceding claims, wherein the protection circuit module comprises a positive temperature coefficient (PTC) element.

11. The battery pack as claimed in any one of the preceding claims, wherein the battery pack further comprises a label to wrap the outside of the battery pack.

12. A method of making a battery pack, the battery pack comprising a bare cell, a protection circuit module electrically coupled to the bare cell and a frame case to cover an entire outside surface of the bare cell excluding a pair of long sides of the bare cell, wherein an undercut is formed on one internal side of the frame case in which the bare cell is accommodated, **characterised by**
forcibly inserting a first side of the bare cell into the undercut in the frame.

13. The method of claim 12, comprising inserting a second side of the bare cell into a part of the frame opposite the part of the frame having the undercut before forcibly inserting the first side of the bare cell into the undercut.

## Patentansprüche

1. Batteriepack, umfassend:
eine Rohzelle;
ein Schutzschaltungsmodul, das mit der Rohzelle elektrisch verbunden ist; und
ein Rahmengehäuse, um eine gesamte Außenfläche der Rohzelle mit Ausnahme zweier Längsseiten der Rohzelle abzudecken,
wobei auf einer Innenseite des Rahmengehäuses eine Hinterschneidung ausgebildet ist, in der die Rohzelle angeordnet ist, **dadurch gekennzeichnet, dass**
das Rahmengehäuse zur Aufnahme der Rohzelle durch zwangsweises Einschieben der Rohzelle in die Hinterschneidung geformt ist.

2. Batteriepack nach Anspruch 1, wobei das Rahmengehäuse quadratisch oder rechteckig ist.

3. Batteriepack nach Anspruch 1 oder 2, wobei eine Seite der Hinterschneidung des Rahmengehäuses länger als die andere Seite, die sich zu den Längsseiten der Rohzelle erstreckt, ist.

4. Batteriepack nach einem der vorangehenden Ansprüche, wobei das Rahmengehäuse ferner auf einer Seite des Rahmengehäuses zumindest eine Öffnung umfasst, sodass ein im Schutzschaltungsmodul enthaltener externer Anschluss exponiert ist.

5. Batteriepack nach einem der vorangehenden Ansprüche, wobei das Batteriepack ferner einen Batterieaufnahmerahmen zur Abdeckung eines Teils einer Außenseite der Rohzelle zwischen der Rohzelle und dem Rahmengehäuse umfasst.

6. Batteriepack nach einem der vorangehenden Ansprüche, wobei das Rahmengehäuse zwei Rippen umfasst, die sich auf zumindest einer Seite des Rahmengehäuses zu den beiden Längsseiten der Rohzelle erstrecken.

7. Batteriepack nach Anspruch 6, wobei eine der beiden Rippen des Rahmengehäuses länger als die andere ist.

8. Batteriepack nach Anspruch 1, ferner umfassend einen Außenrahmen zur Abdeckung des Außenumfangs des Rahmengehäuses.

9. Batteriepack nach Anspruch 8, wobei der Außenrahmen ferner in einer Ebene des Außenrahmens zumindest eine Öffnung aufweist, die in einem Bereich ausgebildet ist, der dem externen Anschluss entspricht, sodass der externe Anschluss, der das Schutzschaltungsmodul enthält, exponiert ist.

10. Batteriepack nach einem der vorangehenden Ansprüche, wobei das Schutzschaltungsmodul ein Bauteil mit einem positiven Temperaturkoeffizienten (Positive Temperature Coefficient, PTC) umfasst.

11. Batteriepack nach einem der vorangehenden Ansprüche, wobei das Batteriepack ferner ein Etikett zum Umhüllen der Batteriepackaußenseite umfasst.

12. Verfahren zur Herstellung eines Batteriepacks, wobei das Batteriepack eine Rohzelle, ein Schutzschaltungsmodul, das mit der Rohzelle elektrisch verbunden ist, und ein Rahmengehäuse zum Abdecken einer gesamten Außenfläche der Rohzelle mit Ausnahme zweier Längsseiten der Rohzelle umfasst, wobei auf einer Innenseite des Rahmengehäuses eine Hinterschneidung ausgebildet ist, in der die Rohzelle angeordnet wird, **gekennzeichnet durch**
zwangsweises Einschieben einer ersten Seite der Rohzelle in die Hinterschneidung im Rahmen.

13. Verfahren nach Anspruch 12, umfassend das Einschieben einer zweiten Seite der Rohzelle in einen Teil des Rahmens, der dem Teil des Rahmens mit der Überschneidung gegenüberliegt, vor dem zwangsweisen Einschieben der ersten Seite der Rohzelle in die Hinterschneidung.

## Revendications

1. Bloc-batterie comprenant :
une cellule nue ;
un module de circuit de protection électriquement couplé à la cellule nue ; et
un boîtier formant châssis pour recouvrir toute la surface externe de la cellule nue excluant une paire de côtés longs de la cellule nue,
dans lequel une gorge est formée sur un côté interne du boîtier formant châssis dans lequel la cellule nue est logée, **caractérisé en ce que** :
le boîtier formant châssis est formé pour recevoir la cellule nue en insérant de force la cellule nue dans la gorge.

2. Bloc-batterie selon la revendication 1, dans lequel le boîtier formant châssis est carré ou rectangulaire.

3. Bloc-batterie selon la revendication 1 ou 2, dans lequel un côté de la gorge du boîtier formant châssis est plus long que l'autre côté qui s'étend vers les côtés longs de la cellule nue.

4. Bloc-batterie selon l'une quelconque des revendications précédentes, dans lequel le boîtier formant châssis comprend en outre au moins une ouverture sur un côté du boîtier formant châssis de sorte qu'une borne externe incluse dans le module de circuit de protection soit exposée.

5. Bloc-batterie selon l'une quelconque des revendications précédentes, le bloc-batterie comprenant en outre un châssis de logement de batterie pour recouvrir une partie d'un côté externe de la cellule nue entre la cellule nue et le boîtier formant châssis.

6. Bloc-batterie selon l'une quelconque des revendications précédentes, dans lequel le boîtier formant châssis comprend une paire de nervures étendues vers la paire de côtés longs de la cellule nue sur au moins un côté du boîtier formant châssis.

7. Bloc-batterie selon la revendication 6, dans lequel l'une de la paire de nervures du boîtier formant châssis est plus longue que l'autre.

8. Bloc-batterie selon la revendication 1, comprenant en outre un châssis de contour pour recouvrir la circonférence externe du boîtier formant châssis.

9. Bloc-batterie selon la revendication 8, dans lequel le châssis de contour comprend en outre au moins une ouverture formée dans une région correspondant à la borne externe dans un plan du châssis de contour de sorte que la borne externe comprenant le module de circuit de protection soit exposée.

10. Bloc-batterie selon l'une quelconque des revendications précédentes, dans lequel le module de circuit de protection comprend un élément à coefficient de température positif (PTC).

11. Bloc-batterie selon l'une quelconque des revendications précédentes, le bloc-batterie comprenant en outre une étiquette pour envelopper l'extérieur du bloc-batterie.

12. Procédé pour fabriquer un bloc-batterie, le bloc-batterie comprenant une cellule nue, un module de circuit de protection électriquement couplé à la cellule nue, et un boîtier formant châssis pour recouvrir toute la surface externe de la cellule nue excluant une paire de côtés longs de la cellule nue, dans lequel une gorge est formée sur un côté interne du boîtier formant châssis dans lequel la cellule nue est logée, **caractérisé par** l'étape consistant à :
insérer de force un premier côté de la cellule nue dans la gorge dans le châssis.

13. Procédé selon la revendication 12, comprenant l'étape consistant à insérer un second côté de la cellule nue dans une partie du châssis opposée à la partie du châssis qui a la gorge avant l'étape consistant à insérer de force le premier côté de la cellule nue dans la gorge.
